# EUROPÄISCHE PATENTSCHRIFT

(11) **EP 1 671 994 B1**
(45) Veröffentlichungstag und Bekanntmachung des Hinweises auf die Patenterteilung: **29.10.2008**
(21) Anmeldenummer: 05026424.1
(22) Anmeldetag: 03.12.2005
(51) Int. Cl.: C08G 18/63, C08G 18/10, C08F 283/00

(54) **Polymerdispersionen in Polyesterpolyolen**
Polymer dispersions in polyester polyols
Dispersions de polymères dans des polyesterpolyols

(30) Priorität: 18.12.2004 DE 102004061103
(43) Veröffentlichungstag der Anmeldung: 21.06.2006
(73) Patentinhaber: Bayer MaterialScience AG, 51368 Leverkusen (DE)
(72) Erfinder: Nefzger, Hartmut, Dr., 50259 Pulheim (DE); Bauer, Erika, 41363 Jüchen (DE); Michels, Erhard, Dr., 51061 Köln (DE)

(56) Entgegenhaltungen:
- EP-A- 0 250 351
- EP-A- 1 541 607

## Beschreibung

Die vorliegende Erfindung betrifft Polymerdispersionen in Polyesterpolyolen, ein Verfahren zu ihrer Herstellung und deren Verwendung zur Herstellung von Polyurethanen, insbesondere mikrozellulären Polyurethanen.

Dispersionen fester, hochmolekularer Polymeren in Polyolen (Polymerpolyole) werden häufig zur Herstellung flexibler Polyurethan-Schaumstoffe eingesetzt. Vorteilhaft ist hierbei beispielsweise, dass die Offenzelligkeit dieser Schaumstoffe erhöht wird und die mechanischen Eigenschaften als Folge der erhöhten Härte verbessert werden. Zu nennen sind in diesem Zusammenhang Weiterreißfestigkeit, Zugspannung und Druckverformungsrest (Compression Set). Hierdurch wird die Einstellung einer verminderten Dichte unter Erhalt der sonst nur mit höherer Dichte erreichbaren Eigenschaften möglich. Dadurch lässt sich eine signifikante Materialeinsparung und somit Kostenreduktion realisieren.

Dispersionen von Polymeren in Polyolen sind literaturbekannt, wobei neben den durch Umsetzung von Olefingruppen enthaltenden Monomeren in Polyolen erhältlichen Dispersionen auch andere Typen von Dispersionen beschrieben sind, z.B. solche, die aus Diaminen und Polyisocyanaten hergestellt werden. Ebenso wird deutlich, dass es sich bei den verwendeten Polyolen meistens um Polyether mit Molmassen von 1000 bis 10000 g/mol handelt, dagegen seltener um Polyesterpolyole. Ein Grund hierfür mag in der vergleichsweise hohen Viskosität liegen, die die Polyesterpolyole selbst und insbesondere auf Polyesterpolyolen basierende Dispersionen im Vergleich zu entsprechenden auf Polyetherpolyolen basierenden Systemen aufweisen. Dennoch besteht ein technisches Interesse an den auf Polyesterpolyolen basierten Dispersionen, insbesondere deswegen, weil daraus hergestellte Polyurethansysteme in vielerlei Hinsicht bessere mechanische Eigenschaften aufwiesen als die entsprechenden Polyurethane auf Polyetherbasis.

Für wässrige Systeme zur Herstellung hitzehärtbarer Einbrennlacke beschreibt DE-OS 44 27 227 die Verwendung von in Wasser dispergierten, mit Polymerisaten aus olefinischen Monomeren gefüllten Polyesterpolyolen als eine der Systemkomponenten.

Wird als vinylisches Monomer Styrol in derartigen Systemen eingesetzt, so sind auf Grund von dessen im Vergleich zu Acrylnitril niedriger Reaktivität und der auf viele Molekülspezies geringeren Kettenübertragungsgeschwindigkeit ansonsten analoge Dispersionen weniger stabil. Demzufolge erfordert der Einsatz von Styrol als radikalisch polymerisierbares vinylisches Monomer zur Herstellung von Dispersionen auf Polyesterpolyolbasis den Einbau von Pfropfstellen in die bzw. am Ende der Polyestermoleküle. Dies gilt insbesondere, wenn ausschließlich Styrol als vinylisches Monomer eingesetzt wird. Solche Pfropfstellen müssen die Kettenübertragung der radikalisch wachsenden Polymermoleküle unter Bildung kovalenter Bindungen und wenn möglich unter Erhalt der wachsenden Radikalkette gewährleisten.

Einige Beispiele für derartige Modifizierungen sind in EP-A 250 351 aufgeführt. So kann z.B. der Einbau von Maleinsäureanhydrid in die Polyesterpolyolkette diese Funktion ausfüllen. EP-A 0 250 351 offenbart ein Verfahren, bei dem in einem Polyesterpolyol der Molmasse 1000 bis 5000 g/mol mindestens ein ethylenisch ungesättigtes Monomer polymerisiert wird. Das Polyesterpolyol enthält hierbei neben den üblichen Bausteinen Polycarbonsäure und Polyalkohol auch olefinische Bestandteile, insbesondere den Baustein Maleinsäureanhydrid.

Nachteilig am Einbau derartiger, die freie Beweglichkeit der Segmente der Polyesterkette verringernder, ungesättigter Polycarbonsäuren, bzw. Anhydride ist jedoch die damit verbundene Viskositätserhöhung der eingesetzten Polyesterpolyole bzw. Polyesterpolyolgemische. In gleicher Weise wirkt auch die durch Einbau von Maleinsäure in die Polyesterkette erhöhte Konzentration an polaren Estercarbonylfunktionen viskositätserhöhend. Die erhöhte Viskosität schränkt die Verwendbarkeit der schon per se höherviskosen Polyesterpolyole weiter ein.

Neben diesen Nachteilen zeigt sich in der industriellen Praxis, dass die mit ungesättigten Bausteinen modifizierten Polyesterpolyole in sehr vielen Fällen grobteilige Dispersionen ergeben, die meist mit dem bloßen Auge sichtbare Partikel enthalten und oft schwer filtrierbar sind.

Aufgabe der vorliegenden Erfindung ist es daher, ein verbessertes Verfahren zur Herstellung von Polymerpolyolen auf Polyesterbasis zur Verfügung zu stellen.

Es wurde nun gefunden, dass die Verwendung einer geringen Menge aus Bernsteinsäure aufgebauten Polyestern (Polysuccinatpolyole) als Bestandteil des Polyesterpolyols zu verbesserten Polyesterpolyoldispersionen führt. In einer weiteren erfindungsgemäßen Variante werden mit Polyisocyanaten vorverlängerte Polyesterpolyole, sowie ggf. Polyetherpolyole in geringen Mengen vorteilhaft mit verwendet.

Gegenstand der Erfindung sind daher Polymerdispersionen, die mindestens ein Polyesterpolyol gemäß Anspruch 1 oder 2 enthalten, das von Bernsteinsäure abgeleitete Baueinheiten aufweist ("Polysuccinatpolyol").

Gegenstand der Erfindung ist auch ein Verfahren zur Herstellung der erfindungsgemäßen Polymerdispersionen durch radikalische Polymerisation olefinisch ungesättigter Monomere in Gegenwart eines von Bernsteinsäure abgeleitete Baueinheiten aufweisenden Polyesterpolyols ohne olefinisch ungesättigte Gruppen und gegebenenfalls weiterer Polyesterpolyole ohne olefinisch ungesättigte Gruppen.

Das Basis-Polyesterpolyol wird aus Komponenten hergestellt, die keine olefinischen Bestandteile aufweisen. Basis-Polyesterpolyole sind Hydroxylendgruppen aufweisende Polykondensationsprodukte aus Diolen und Dicarbonsäuren bzw. deren Anhydriden oder niedermolekularen Estern oder Halbestern, bevorzugt solchen mit monofunktionellen Alkoholen wie Methanol, Ethanol, 1-Propanol, 2-Propanol, 1-Butanol und 2-Butanol.

Beispiele für geeignete Diole sind Ethylenglykol, 1,2-Propandiol, 1,3-Propandiol, 2-Methyl-1,3-propandiol, 1,4-Butandiol, 1,5-Pentandiol, 3-Methyl-1,5-pentandiol, 1,6-Hexandiol, 1,8-Octandiol, 1,10-Decandiol, Neopentylglykol, Diethylenglykol, Triethylenglykol, Tetraethylenglykol usw. Geeignet sind auch Polyetherpolyole mit zahlenmittleren Molmassen von 250 bis 4500 g/mol, insbesondere solche, die überwiegend von 1,2-Propylenoxid abgeleitete Einheiten enthalten. Entsprechend sind auch Etheroligomere des Butandiols wie Dibutylenglykol, Tributylenglykol, bzw. entsprechende, durch ringöffnende Polymerisation des Tetrahydrofurans erhältliche Diole mit zahlenmittleren Molmassen von 240 bis 3000 g/mol als Diole einsetzbar. Entsprechende Verbindungen des 1,6-Hexandiols, Di- und Trihexylenglykol, bzw. Oligomerengemische, die durch azeotrope Verätherung des 1,6-Hexandiols erhalten werden können, sind ebenfalls geeignet.

Daneben können auch bis zu 5 Gew.-% höherfunktionelle Polyole mit verwendet werden, beispielsweise 1,1,1-Trimethylolpropan, Glycerin oder Pentaerythrit, sowie auf diesen gestartete Polypropylenoxid- und Polyethylenoxidpolyole mit zahlenmittleren Molmassen von 250 bis 4500 g/mol.

Als Dicarbonsäuren ohne Olefingruppierung können aliphatische und aromatische Verbindungen einzeln oder im Gemisch verwendet werden. Beispielhaft seien genannt: Glutarsäure, Adipinsäure, Pimelinsäure, Suberinsäure, Sebacinsäure, Phthalsäure, Isophthalsäure, Terephthalsäure. Daneben können auch deren Anhydride sowie deren Ester oder Halbester mit niedermolekularen, insbesondere monofunktionellen Alkoholen eingesetzt werden.

Analog können auch Ester von cyclischen Hydroxylcarbonsäuren, bevorzugt solche, die aus ε-Caprolacton hergestellt werden können, eingesetzt werden.

Entsprechend können auch Polyester der Kohlensäure, also Polycarbonatpolyole verwendet oder mitverwendet werden. Diese können hergestellt werden durch Umesterung von Dimethylcarbonat oder Diphenylcarbonat mit Diolen und Triolen, sowie durch Umesterung mit hydroxylendständigen Oligoester- und Oligoetherdiolen mit zahlenmittleren Molmassen von 200 bis 1000 g/mol.

Die erfindungsgemäß zu verwendenden Polyesterpolyole weisen eine mittlere Hydroxylfunktionalität von 1,8 bis 3, bevorzugt 1,85 bis 2,7, besonders bevorzugt 1,9 bis 2,5 auf, sowie eine zahlenmittlere Molmasse von 1000 bis 5000, bevorzugt 1300 bis 4800, besonders bevorzugt 1600 bis 4500 g/mol auf.

Werden mehrere Polyesterpolyole verwendet, so beziehen sich die im obigen Absatz genannten Grenzen der Molmasse auf das Polyesterpolyolgemisch. In diesem Fall kann selbstverständlich das zahlenmittlere Molekulargewicht wenigstens einer der Einzelkomponenten auch außerhalb der angegebenen Grenzen, z.B. im Bereich von 450 bis kleiner 1000 g/mol liegen.

Als von Bernsteinsäure abgeleitete Baueinheiten aufweisende Polyesterpolyole (Polysuccinatpolyole) werden solche mit zahlenmittleren Molekulargewichten von 250 bis 4000 g/mol eingesetzt, die als Carbonsäure-Komponente überwiegend (mehr als 50 Gew.-%, bezogen auf alle Carbonsäuren) Bernsteinsäure enthalten. Bevorzugt sind Polyesterpolyole, bei denen mehr als 80 Gew.-% der von Carbonsäuren abgeleiteten Baueinheiten von Bernsteinsäure abgeleitet sind. Die Polyesterpolyole können als Aufbaukomponenten alle weiter oben aufgeführten Bausteine enthalten. In einer bevorzugten Ausführungsform der Erfindung wird ein überwiegend von Bernsteinsäure abgeleitete Baueinheiten enthaltendes Polyesterpolyol (Polysuccinatpolyol) im Gemisch mit Polyesterpolyolen verwendet, die keine von Bernsteinsäure abgeleitete Baueinheiten enthalten.

Der Mischungsanteil des Polysuccinatpolyols in allen Polyesterpolyolkomponenten beträgt erfindungsgemäß weniger als 50 Gew.-%, bevorzugt weniger als 30 Gew.-%, besonders bevorzugt weniger als 10 Gew.-%. Bei Einbau von Bernsteinsäure in die Basis-Polyesterpolyole, sei es durch Umesterung oder Direktveresterung, gelten die Grenzen bezüglich der Zusammensetzung entsprechend.

Weiterhin bevorzugt sind sog. OH-Prepolymere, erhältlich durch Umsetzung der oben genannten Polysuccinatpolyole mit molar unterschüssigem Polyisocyanat. Die molaren Einsatzverhältnisse von Isocyanatgruppen zu Hydroxylgruppen (Kennzahl) betragen hierbei 0 bis 0,9, bevorzugt 0 bis 0,7, besonders bevorzugt 0,3 bis 0,6.

Als Polyisocyanate können aliphatische und aromatische Polyisocyanate eingesetzt werden, z.B. Hexamethylendiisocyanat, Isophorondiisocyanat, 2,4- und 2,6-Toluylendiisocyanat oder deren Gemische, sowie Polyisocyanate aus der Diphenylmethandiisocyanat-Reihe, einschließlich deren höherkernige Vertreter, Gemische derselben, sowie Naphthalin-1,5-diisocyanat.

Besonders bevorzugt sind Polyisocyanate aus der Diphenylmethan-Reihe mit Anteilen an sog. 2-Kern-Spezies (2,2'-, 2,4'- und 4,4'-Isomeren) von weniger als 50 Gew.-%, bzw. einer mittleren Funktionalität von mindestens 2,2.

Die Polysuccinatpolyole werden in solchen Mengen eingesetzt, dass der Anteil der zur Modifizierung verwendeten Substanzen, d.h. Polysuccinatpolyol oder daraus hergestelltem OH-Prepolymer, bezogen auf den gesamten Reaktionsansatz, inclusive der radikalisch polymerisierbaren Vinyl-Monomere sowie etwaiger Lösemittel, 0,05 bis 15 Gew.-% beträgt.

Beispiele geeigneter radikalisch polymerisierbarer Vinyl-Monomere sind Styrol, alpha-Methylstyrol, Ethylstyrol, Vinyltoluol, Divinylbenzol, Isopropylstrol, Chlorostyrol, Butadien, Isopren, Pentadien, Acrylsäure, Methacrylsäure, Methacrylsäuremethylester, Vinylacetat, Acrylnitril, Methylvinylketon oder Kombinationen dieser Verbindungen. Bevorzugt eingesetzt werden Styrol, alpha-Methylstyrol, Acrylnitril, Methacrylnitril, Methacrylsäurealkylester mit C₁-C₃₀-Alkylresten (z.B. Methyl-, Ethyl-, Butyl-, Hexyl-, Dodecyl- usw). Besonders bevorzugt sind Styrol und Acrylnitril, wobei das Styrol bevorzugt in einem Anteil von mehr als 75 Gew.-% verwendet wird, besonders bevorzugt von mehr als 90 Gew.-%.

Der Anteil dieser erfindungsgemäß zu verwendenden radikalisch polymeriserbaren VinylMonomeren am Gesamtansatz, d.h. der Füllgrad der fertigen Dispersion, beträgt erfindungsgemäß 2 bis 55 Gew.-%, bevorzugt 4 bis 40 Gew.-%, besonders bevorzugt 5 bis 33 Gew.-%. Der Füllgrad ist durch Nachverdünnung mit einem zweiten Basis-Polyesterpolyol einstellbar.

In einer bevorzugten Ausführungsform werden als Basis-Polyesterpolyol zwei unterschiedliche Polyesterpolyole eingesetzt, die sich mindestens bezüglich ihres zahlenmittleren Molekulargewichtes unterschieden, wobei das Polyesterpolyol mit dem kleineren Molekulargewicht erst dann zugemischt wird, wenn die radikalische Polymerisation des vinylischen Monomeren im Gemisch von Polyesterpolyol mit höherem Molekulargewicht und modifiziertem Polyesterpolyol beendet ist.

Für die Initiierung der radikalischen Polymerisation werden an sich bekannte Radikalstarter verwendet. Beispiele aus der Gruppe der Azo-Initiatoren sind alpha, alpha'-azo-2-Methylbutyronitril, alpha,alpha'-azo-2-Heptonitril, 1,1'-azo-1-Cyclohexancarbonitril, Dimethyl-alpha,alpha'azo-isobutyrat, 4,4'-azo-4-cyanopentansäure, Azo-bis(2-methylbutyronitril), Azo-bis-isobutyronitril. Aus der Gruppe der Peroxide, Persulfate, Perborate, Percarbonate seien beispielhaft genannt: Dibenzoylperoxid, Acetylperoxid, Benzyolhydroperoxid, t-Butylhydroperoxid, Di-t-Butylperoxid, 2-Ethylhexansäure-tert.-butylperester, Diisopropylperoxydicarbonat, usw.

Die Polymerisation wird typischerweise in Anwesenheit eines Lösungsmittels ausgeführt, kann aber auch ohne Lösungsmittel bewerkstelligt werden. Als Lösungsmittel können beispielsweise eingesetzt werden: Benzol, Toluol, Xylol, Acetonitril, Hexan, Heptan, Dioxan, Ethylacetat, N,N-Dimethylformamid, N,N-Dimethylacetamid, etc. Bevorzugt sind Benzol, Xylol und Toluol.

Gegenstand der Erfindung sind auch die nach den erfindungsgemäßen Verfahren erhaltenen Polymerdispersionen. Die erhaltenen Produkte sind weiße Dispersionen, die ein hochmolekulares Polymer oder Copolymer, ein konventionelles, bei Raumtemperatur festes oder bevorzugt flüssiges Polyesterpolyol und ein zur Phasenstabilisierung notwendiges weiteres modifiziertes Polyesterpolyol enthalten. Sie können beispielsweise bei einem Füllgrad von 25 Gew.-% Polystyrol und einer OH-Zahl von 50 bis 60 Viskositäten von 15 000 bis 35 00 mPas bei 25°C und 3000 bis 8000 mPas bei 50°C aufweisen. Die Viskosität ist proportional zur Viskosität des verwendeten Basis-Polyesterpolyols und umgekehrt proportional zur OH-Zahl.

Die erfindungsgemäß hergestellten Polymerpolyole eignen sich zur Herstellung von Polyurethanen, bzw. Polyurethan-Werkstoffen, insbesondere zur Herstellung mikrozellularer Polyurethan-Elastomere, wie sie für die Herstellung von Schuhsohlen Verwendung finden. Gegenstand der Erfindung sind auch Schuhsohlen enthaltend das Umsetzungsprodukt der erfindungsgemäßen Polymerdispersionen mit Polyisocyanaten oder Polyisocyanat-Prepolymeren.

Mit den erfindungsgemäßen Polymerdispersionen lassen sich Polyurethane erhalten, die gegenüber Polyurethanen, die ohne Polymerdispersion hergestellt werden, bei gleicher Dichte eine größere Härte aufweisen. Wenn neben der Dichte auch die Härte konstant gehalten werden soll, kann bei Einsatz der erfindungsgemäßen Polymerdispersionen mit einer deutlich verringerten Menge an Polyisocyanat gearbeitet werden.

### Beispiele

A.) Basis-Polyesterpolyole
B.) Herstellung modifizierter Polyesterpolyole
C.) Herstellung erfindungsgemäßer Dispersionen
D.) Vergleichsbeispiele
E.) Verarbeitungsbeispiele

### A.) Basis-Polyesterpolyole

### A.1. Polyetheresterpolyol

Adipinsäure, Ethylenglykol, Butandiol, Diethylenglykol und ein bifunktionelles Polyetherpolyol mit einem Propylenoxidgehalt von ca. 70% und einem Ethylenoxidgehalt von ca. 30% sowie einer OH-Zahl von 28 mg KOH/g (Desmophen® L 2830, Bayer AG) im Gew.-Verhältnis 36,53 : 5,19 : 9,53 : 8,67 : 28,97 wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 39,1 mg KOH/g und die Viskosität zu 1070 mPas (75°C).

### A.2. Desmophen^{®} 2003E (Bayer AG)

Handelsübliches Polyadipat, hergestellt aus Adipinsäure und äquimolaren Anteilen an Ethylen- und Diethylenglykol mit einer OH-Zahl von ca. 56 mg KOH/g sowie einer Viskosität von ca. 520 mPas (75°C).

### A.3. Basis-Polyesterpolyol mit hohem Molekulargewicht

2779 g (26,22 Mol) Diethylenglykol, 813 g (13,12 Mol) Ethylenglykol und 5452 g (37,12 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 27,8 mg KOH/g und die Säurezahl zu 0,8 mg KOH/g.

### A.4. Basis-Polyesterpolyol mit niedrigem Molekulargewich

3177 g (29,97 Mol) Diethylenglykol, 932 g (15,03 Mol) Ethylenglykol und 5256 g (36 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 120,1 mg KOH/g und die Säurezahl zu 0,3 mg KOH/g.

### A.5. Basis-Polyesterpolyol mit niedrigem Molekulargewicht

2628 g (24,79 Mol) Diethylenglykol, 1538 g (24,79 Mol) Ethylenglykol und 5970 g (40,89 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 98,1 mg KOH/g und die Säurezahl zu 0,3 mg KOH/g. Viskosität: 210 mPas (75°C).

### A.6. Basis-Polyesterpolyol mit niedrigem Molekulargewicht

1208 g (11,4 Mol) Diethylenglykol, 1208 g (19,48 Mol) Ethylenglykol, 1208 g (13,42 Mol) Butandiol und 5840 g (40 Mol) Adipinsäure wurden unter Wasserabspaltung langsam auf 200°C erhitzt. Nach Ende der Wasserbildung wurde auf 120°C abgekühlt und mit 180 mg Zinndichlorid katalysiert. Die Reaktionsmischung wurde im Wasserstrahlvakuum langsam im Verlauf von 4 Std. auf 200°C erhitzt, wobei sich weiteres Wasser abspaltete. Man beließ weitere 24 Std. bei diesen Reaktionsbedingungen und bestimmte dann die Hydroxylzahl zu 60,1 mg KOH/g und die Säurezahl zu 0,7 mg KOH/g. Viskosität: 8930 mPas (25°C).

### A.7. Desmophen^{®} 2002H (Bayer AG)

Handelsübliches Polyadipat, hergestellt aus Adipinsäure und einem Gemisch aus Ethylen- und Butylenglykol mit einer OH-Zahl von ca. 56 mg KOH/g sowie einer Viskosität von ca. 620 mPas (75°C).

### B.) Herstellung modifizierter Polyesterpolyole

### B.1. Herstellung eines Polysuccinatpolyols

1122 g (7,48 Mol) Triethylenglykol und 578 g (5,78 Mol) Bernsteinsäureanhydrid wurden unter Zinndichlorid-katalyse (40 mg) in einer Schmelzpolykondensation bei 200°C unter Wasserabspaltung, zuletzt im Vakuum, umgesetzt. Die OHZ betrug 116,5 mg KOH/g; die Säurezahl wurde zu 0,2 mg KOH/g bestimmt.

### B.2. Herstellung eines OH-Prepolymeren

481,5 g des Polysuccinatpolyols aus B.1. wurden bei 115°C für 3 Std. mit 62,5 g eines Polyisocyanats der Diphenylmethanreihe (Desmodur® 44V20, Bayer AG) bis zum Erreichen eines NCO-Gehaltes von 0% NCO umgesetzt. Die OHZ betrug 67,5 mgKOH/g.

### B.3. Herstellung eines OH-Prepolymeren

481,5 g des Polysuccinatpolyols aus B.1. wurden für eine Stunde bei 80°C und für weitere zwei Stunden bei 100°C mit 62,5 g eines Polyisocyanats der Diphenylmethanreihe (Desmodur® 44M, Bayer AG) bis zum Erreichen eines NCO-Gehaltes von 0% NCO umgesetzt. Die Viskosität wurde zu 2240 mPas (75°C) bestimmt und die OH-Zahl betrug 51,7 mg KOH/g.

### B.4. Herstellung eines OH-Prepolymeren

463 g des Polyadipatpolyols aus A.4. wurden für eine Stunde bei 80°C und für weitere zwei Stunden bei 100°C mit 62,5 g eines Polyisocyanats der Diphenylmethanreihe (Desmodur® 44M, Bayer AG) bis zum Erreichen eines NCO-Gehaltes von 0% NCO umgesetzt. Die Viskosität wurde zu 2680 mPas (75°C) bestimmt und die OH-Zahl betrug 53,5 mg KOH/g.

### B.5. Herstellung, eines OH-Prepolymeren

463 g des Polyadipatpolyols aus A.4. wurden für jeweils eine Stunde bei 80°C,dann bei 100°C, sowie anschließend für weitere zwei Stunden bei 110°C mit 62,5 g eines Polyisocyanats der Diphenylmethanreihe (Desmodur® 44V20, Bayer AG) bis zum Erreichen eines NCO-Gehaltes von 0% NCO umgesetzt. Die Viskosität wurde zu 2950 mPas (75°C) bestimmt und die OH-Zahl betrug 56,9 mg KOH/g.

### B.6. Herstellung eines Acrylat-Endgruppen enthaltenden Polyetherpolyols

4000 g Polypropylenoxid mit einer OH-Zahl von 28 mg KOH/g, gestartet auf TMP und 1 g Titantetraisobutylat wurden bei 50°C langsam mit 144 g Acrylsäuremethylester versetzt, wobei Methanol bei erhöhter Temperatur aus dem Reaktionsgemisch entfernt wurde. Die OH-Zahl des Acrylat-Endgruppen enthaltenden Polyetherpolyols betrug 21 mg KOH/g; die Viskosität 1700 mPas bei 25°C.

### B.7. Herstellung eines Maleinsäure enthaltenden Polyesterpolyols

1148 g (7,65 Mol) Triethylenglykol und 583 g (5,95 Mol) Maleinsäureanhydrid, sowie 0,5 g Hydrochinon wurden unter Zinndichlorid-Katalyse (40 mg) in einer Schmelzpolykondensation bei 200°C unter Wasserabspaltung, zuletzt im Vakuum, umgesetzt. Die OHZ betrug 112 mgKOH/g; die Säurezahl wurde zu 0,9 mgKOH/g bestimmt.

### B.8. Herstellung eines Maleinsäure enthaltenden Polyadipates

5548 g (38 Mol) Adipinsäure, 196 g (2 Mol) Maleinsäureanhydrid, 1728 g (27,87 Mol) Ethylenglykol und 1728 g (16,3 Mol) Diethylenglykol (16,3 Mol) wurden unter Zinndichlorid-Katalyse (200 mg) in einer Schmelzpolykondensation bei 200°C unter Wasserabspaltung, zuletzt im Vakuum, umgesetzt. Die OHZ betrug 55 mg KOH/g; die Säurezahl wurde zu 0,2 mg KOH/g bestimmt. Viskosität bei 25°C: 2550 mPas.

### C.) Herstellung erfindungsgemäßer Polymerdispersionen,

### C.1. Herstellung einer Polymerdispersion unter Verwendung eines OH-Prepolymeren (B.2.)

476 g Polyesterpolyol A.2. wurden mit 8,7 g des OH-Prepolymeren B.2., 100 g Toluol und 1 g Azo-bis(2-methylbutyronitril) verrührt. Man leitete für 20 min. einen schwachen Stickstoffstrom durch die Lösung, gab 80 g Styrol zu und erwärmte unter Rühren im Verlauf von 30 min. auf 80°C. Nach 20 min. bei 80°C wurde die Temperatur in weiteren 30 min. auf 120°C erhöht.

Eine zuvor bereitete Lösung aus 600 g Polyesterpolyol A.2., 14,3 g des OH-Prepolymeren B.2., 200 g Toluol, 5,4 g Azo-bis(2-methylbutyronitril) und 430 g Styrol wurde im Verlauf von 2 Std. bei einer Drehzahl von zunächst 300 U/min. zudosiert, wobei die Drehzahl nach 20 min. auf 350 U/min. und nach weiteren 40 min. auf 400 U/min. erhöht wurde. Nach Ende dieser Zudosierung ließ man 5 min. nachreagieren.

Eine weitere zuvor bereitete Lösung aus 38 g Polyesterpolyol A.2., 3,5 g des OH-Prepolymeren B.2., 50 g Toluol und 0,6 g Azo-bis(2-methylbutyronitril) wurde danach innerhalb von 30 min. zudosiert. Man ließ nach beendeter Zugabe für 2 Std. bei 120°C nachreagieren.

Zur Aufarbeitung wurde an das Reaktionsgemisch zunächst Wasserstrahlvakuum angelegt, um das Lösungsmittel und eventuell nicht umgesetztes Styrol weitgehend zu entfernen. Zur Vervollständigung legte man Ölpumpenvakuum an, wobei nach 2 Stunden bei 0,5 mbar sowohl Styrol als auch Toulol weitestgehend entfernt waren.

Die erhaltene Dispersion war über ein 200µm Sieb filtrierbar, phasenstabil und wies bei 25°C eine Viskosität von 18600 mPas, bzw. bei 50°C von 3690 mPas auf. Der Füllgrad betrug ca. 26,7 Gew.-%, die OH-Zahl 54 mg KOH/g.

### C.2. Herstellung einer Polymerdispersion unter Verwendung eines OH-Prepolymeren (B.2.)

| | |
|---|---|
| Vorlage: | 476 g Polyesterpolyol A.2. |
| | 3,0 g OH-Prepolymer B.2. |
| | 100 g Toluol |
| | 80 g Styrol |
| | 0,6 g Azo-bis(2-methylbutyronitril) |
| | 66 g 1,4-Butandiol |

wurden bei 115°C vorgelegt. Analog Beispiel C.1. wurden folgende Gemische zudosiert:

| | |
|---|---|
| Dosierung 1: | 600 g Polyesterpolyol A.2. |
| | 14,3 g OH-Prepolymer B.2. |
| | 200 g Toluol |
| | 533 g Styrol |
| | 5,4 g Azo-bis(2-methylbutyronitril) |

| | |
|---|---|
| Dosierung 2: | 38 g Polyesterpolyol A.2. |
| | 3,5 g OH-Prepolymer B.2. |
| | 50 g Toluol |
| | 0,6 g Azo-bis(2-methylbutyronitril) |

Die erhaltene Dispersion war über ein 200µm Sieb filtrierbar, phasenstabil und wies bei 25°C eine Viskosität von 18600 mPas, bzw. bei 50°C von 3850 mPas auf; Füllgrad ca. 32 Gew.-%, OH-Zahl 69,6 mg KOH/g.

### C.3. Herstellung einer Polymerdispersion unter Verwendung eines OH-Prepolymeren (B.2.)

| | |
|---|---|
| Vorlage: | 476 g Polyesterpolyol A.2. |
| | 3,0 g OH-Prepolymer B.2. |
| | 100 g Toluol |
| | 80 g Styrol |
| | 0,6 g Azo-bis(2-methylbutyronitril) |
| | 66 g 1,4-Butandiol |

wurden bei 115°C vorgelegt. Analog Beispiel C.1. wurden folgende Gemische zudosiert:

| | |
|---|---|
| Dosierung 1: | 600 g Polyesterpolyol A.2. |
| | 14,3 g OH-Prepolymer B.2. |
| | 200 g Toluol |
| | 738 g Styrol |
| | 5,4 g Azo-bis(2-methylbutyronitril) |

| | |
|---|---|
| Dosierung 2: | 38 g Polyesterpolyol A.2. |
| | 3,5 g OH-Prepolymer B.2. |
| | 50 g Toluol |
| | 0,6 g Azo-bis(2-methylbutyronitril) |

Die erhaltene Dispersion war über ein 200µm Sieb filtrierbar, phasenstabil und wies bei 25°C eine Viskosität von 32100 mPas, bzw. bei 50°C von 7410 mPas auf; Füllgrad ca. 40 Gew.-%, OH-Zahl 68,9 mg KOH/g.

### C.4. Herstellung einer Polymerdispersion unter Verwendung eines Polysuccinats (B.1.)

| | |
|---|---|
| Vorlage: | 476 g Polyesterpolyol A.3. |
| | 3,0 g Polysuccinat B.1. |
| | 100 g Toluol |
| | 80 g Styrol |
| | 1 g Azo-bis(2-methylbutyronitril) |

wurden bei 115°C vorgelegt. Analog Beispiel. C.1. wurden folgende Gemische zudosiert:

| | |
|---|---|
| Dosierung 1: | 600 g Polyesterpolyol A.3. |
| | 14,3 g Polysuccinat B.1. |
| | 200 g Toluol |
| | 800 g Styrol |
| | 6,4 g Azo-bis(2-methylbutyronitril) |

| | |
|---|---|
| Dosierung 2: | 38 g Polyesterpolyol A.3. |
| | 4 g Polysuccinat B.1. |
| | 100 g Toluol |
| | 0,6 g Azo-bis(2-methylbutyronitril) |

Vor der Filtration wurde die OH-Zahl zu 18,4 mg KOH/g bestimmt. Es wurde mit 1127 g des Polyesterpolyols A.4. abgemischt.

Die erhaltene Dispersion war über ein 200µm Sieb filtrierbar, phasenstabil und wies bei 25°C eine Viskosität von 27200 mPas, bzw. bei 50°C von 5620 mPas auf; Füllgrad ca. 24,3 Gew.-%, OH-Zahl 58,3 mg KOH/g.

### D.) Vergleichsbeispiele

### D.1. Verwendung des Prepolymers B.3. aus Polysuccinatpolyol B.1. und Desmodur^{®} 44M zur Herstellung eines Polymerpolyols

| | |
|---|---|
| Vorlage: | 476 g Polyesterpolyol A.3. |
| | 3,0 g OH-Prepolymer B.3. |
| | 100 g Toluol |
| | 80 g Styrol |
| | 1 g Azo-bis(2-methylbutyronitril) |

wurden bei 115°C vorgelegt und folgende Gemische zudosiert, weitere Details siehe Bspl. C.1.):

| | |
|---|---|
| Dosierung 1: | 600 g Polyesterpolyol A.3. |
| | 14,3 g OH-Prepolymer B.3. |
| | 200 g Toluol |
| | 800 g Styrol |
| | 6,4 g Azo-bis(2-methylbutyronitril) |

| | |
|---|---|
| Dosierung 2: | 38 g Polyesterpolyol A.3. |
| | 4 g OH-Prepolymer B.3. |
| | 100 g Toluol |
| | 0,6 g Azo-bis(2-methylbutyronitril) |

Vor der Filtration wurde die OH-Zahl zu 18 mg KOH/g bestimmt. Es wurde mit 1136 g des Polyesterpolyols A.4. abgemischt.

Die erhaltene Dispersion war nicht filtrierbar.

### D.2. Herstellung einer Polymerdispersion unter Verwendung eines OH-Prepolymeren auf Polyadipatbasis (B.4.)

| | |
|---|---|
| Vorlage: | 476 g Polyesterpolyol A.3. |
| | 3,0 g OH-Prepolymer B.4. |
| | 100 g Toluol |
| | 80 g Styrol |
| | 1 g Azo-bis(2-methylbutyronitril) |

wurden bei 115°C vorgelegt. Analog Beispiel. C.1. wurden folgende Gemische zudosiert:

| | |
|---|---|
| Dosierung 1: | 600 g Polyesterpolyol A.3. |
| | 21 g OH-Prepolymer B.4. |
| | 200 g Toluol |
| | 800 g Styrol |
| | 6,4 g Azo-bis(2-methylbutyronitril) |

| | |
|---|---|
| Dosierung 2: | 38 g Polyesterpolyol A.3. |
| | 4 g OH-Prepolymer B.4. |
| | 100 g Toluol |
| | 0,6 g Azo-bis(2-methylbutyronitril) |

Vor der Filtration wurde die OH-Zahl zu 17,7 mg KOH/g bestimmt. Es wurde mit 1123 g des Polyesterpolyols A.4. abgemischt.

Die erhaltene Dispersion war über ein 200µm Sieb schwer filtrierbar. Es verblieb ein erheblicher Filtrationsrückstand, so dass das Filtrationsverhalten mit mangelhaft einzustufen war. Die Dispersion war jedoch phasenstabil und wies bei 25°C eine Viskosität von 30100 mPas, bzw. bei 50°C von 5550 mPas auf; Füllgrad ca. 24,1 Gew.-%, OH-Zahl 57,7 mg KOH/g.

### D.3. Herstellung einer Polymerdispersion unter Verwendung eines OH-Prepolymeren auf Polyadipatbasis (B.5.)

| | |
|---|---|
| Vorlage: | 476 g Polyesterpolyol A.3. |
| | 3,0 g OH-Prepolymer B.5. |
| | 100 g Toluol |
| | 80 g Styrol |
| | 1 g Azo-bis(2-methylbutyronitril) |

wurden bei 115°C vorgelegt. Analog Beispiel. C.1. wurden folgende Gemische zudosiert:

| | |
|---|---|
| Dosierung 1: | 600 g Polyesterpolyol A.3. |
| | 21 g OH-Prepolymer B.5. |
| | 200 g Toluol |
| | 800 g Styrol |
| | 6,4 g Azo-bis(2-methylbutyronitril) |

| | |
|---|---|
| Dosierung 2: | 38 g Polyesterpolyol A.3. |
| | 4 g OH-Prepolymer B.5. |
| | 100 g Toluol |
| | 0,6 g Azo-bis(2-methylbutyronitril) |

Vor der Filtration wurde die OH-Zahl zu 18 mg KOH/g bestimmt. Es wurde mit 1123 g des Polyesterpolyols A.4. abgemischt.

Die erhaltene Dispersion war über ein 200µm Sieb schwer filtrierbar. Es verblieb ein erheblicher Filtrationsrückstand, so dass das Filtrationsverhalten mit mangelhaft einzustufen war. Die Dispersion war jedoch phasenstabil und wies bei 25°C eine Viskosität von 26800 mPas, bzw. bei 50°C von 5340 mPas auf; Füllgrad ca. 23,9 Gew.-%, OH-Zahl 57,7 mg KOH/g.

### D.4. Herstellung einer Polymerdispersion unter Verwendung eines Acrylatgruppen enthaltenden Polyetherpolyols (B.6.)

| | |
|---|---|
| Vorlage: | 476 g Polyesterpolyol A.7. |
| | 8,7 g modifiziertes Polyol B.6. |
| | 200 g Toluol |
| | 80 g Styrol |
| | 0,6 g Azo-bis(2-methylbutyronitril) |

wurden bei 115°C vorgelegt. Analog Beispiel. C.1. wurden folgende Gemische zudosiert:

| | |
|---|---|
| Dosierung 1: | 538 g Polyesterpolyol A.7. |
| | 43 g modifiziertes Polyol B.6. |
| | 200 g Toluol |
| | 738 g Styrol |
| | 5,4 g Azo-bis(2-methylbutyronitril) |

| | |
|---|---|
| Dosierung 2: | 100 g Polyesterpolyol A.7. |
| | 10,4 g modifiziertes Polyol B.6. |
| | 50 g Toluol |

Die erhaltene Dispersion war instabil; es bildeten sich zwei Phasen; Füllgrad ca. 40 Gew.-%.

### D.5. Herstellung einer Polymerdispersion unter Verwendung eines Maleinsäureeinheiten enthaltenden Polyesterpolyols (B.7.)

| | |
|---|---|
| Vorlage: | 476 g Polyesterpolyol A.4. |
| | 8,7 g modifiziertes Polyol B.7. |
| | 200 g Toluol |
| | 80 g Styrol |
| | 0,6 g Azo-bis(2-methylbutyronitril) |
| | 33 g Isopropanol |

wurden bei 115°C vorgelegt. Analog Beispiel. C.1. wurden folgende Gemische zudosiert:

| | |
|---|---|
| Dosierung 1: | 600 g Polyesterpolyol A.4. |
| | 43 g modifiziertes Polyol B.7. |
| | 200 g Toluol |
| | 533 g Styrol |
| | 5,4 g Azo-bis(2-methylbutyronitril) |

| | |
|---|---|
| Dosierung 2: | 38 g Polyesterpolyol A.4. |
| | 10,4 g modifiziertes Polyol B.7. |
| | 50 g Toluol |
| | 0,6 g Azo-bis(2-methylbutyronitril) |

Die erhaltene Dispersion war nicht filtrierbar.

### D.6. Herstellung einer Polymerdispersion unter Verwendung eines Maleinsäureeinheiten enthaltenden Polyadipats (B.8.)

| | |
|---|---|
| Vorlage: | 830 g Polyesterpolyol A.6. |
| | 50 g Toluol |

wurden bei 120°C vorgelegt. Analog Beispiel. C.1. wurde folgendes Gemisch zudosiert:

| | |
|---|---|
| Zudosierung: | 353 g Polyesterpolyol A.6. |
| | 62 g modifiziertes Polyol B.8. |
| | 200 g Toluol |
| | 523 g Styrol |
| | 13 g Azo-bis(2-methylbutyronitril) |

Das Reaktionsprodukt war nicht filtrierbar.

### E.) Verarbeitungsbeispiele

Zur Herstellung von Polyurethan-Prüfkörpern wurde die Isocyanat-Komponente bei 40°C in einer Niederdruck-Verarbeitungsmaschine (PSA 95, Klöckner DESMA Schuhmaschinen GmbH), mit der eine Polymerdispersion enthaltenden Polyol-Komponente bei 45°C vermischt, die Mischung in eine auf 50°C temperierte Aluminiumform (Größe 200*200*10 mm) eindosiert, die Form geschlossen und nach 4 Minuten das Elastomer entformt.

Nach 24 h Lagerung wurde die Härte der so hergestellten Elastomer-Platten mit einem Härtemessgerät Typ Shore A gemäß DIN 53 505 gemessen.

### E1. Herstellung eines Polyurethan-Elastomers

Zusammensetzung der Polyolkomponente:
71,00 Gew-% Polyesterpolyol A.2.
15,00 Gew-% Polymerdispersion C.1.
11,45 Gew-% Ethandiol
0,80 Gew-% Triethanolamin
0,45 Gew-% Diazabicyclo[2.2.2.]octan
1,10 Gew-% Wasser
0,20 Gew-% Zellstabilisator (Dabco® DC 193, Air Products)

Ein NCO-Prepolymer auf Basis Methylendiisocyanat und Polyesterpolyol mit einem NCO-Gehalt von 19,3 Gew.-% (Desmodur® PM 53, Bayer AG) wurde mit der Polyol-Komponente wie beschrieben verarbeitet. Das Mischungsverhältnis der Polyol-Komponente zur Isocyanat-Komponente betrug 100:122 Gew.-Teile, die resultierende Freischaumdichte 140 kg/m³. Die nach 4 min Formstandzeit entformbaren Prüfkörper mit einer Formteildichte von 350 kg/m³ wiesen eine Shore A-Härte von 51 auf.

### E.2 Herstellung eines Polyurethan-Elastomers

Zusammensetzung der Polyolkomponente:
50.55 Gew-% Polyesterpolyol A.2.
35,50 Gew-% Polymerdispersion C.1.
11,40 Gew-% Ethandiol
0,80 Gew-% Triethanolamin
0,45 Gew-% Diazabicyclo[2.2.2.]octan
1,10 Gew-% Wasser
0,20 Gew-% Zellstabilisator (Dabco® DC 193, Air Products)

Ein NCO-Prepolymer auf Basis Methylendiisocyanat und Polyesterpolyol mit einem NCO-Gehalt von 19,3 Gew.-% (Desmodur® PM 53, Bayer AG) wurde mit der Polyol-Komponente wie beschrieben verarbeitet. Das Mischungsverhältnis der Polyol-Komponente zur Isocyanat-Komponente betrug 100:120 Gew.-Teile, die resultierende Freischaumdichte 153 kg/m³. Die nach 4 min Formstandzeit entformbaren Prüfkörper mit einer Formteildichte von 350 kg/m³ wiesen eine Shore A-Härte von 56 auf.

Die Beispiele belegen, dass die Mitverwendung von erfindungsgemäßen Polymerdispersionen bei unveränderter Dichte zu einer Härtesteigerung führt. Bei konstantem Ethandiol-Anteil führt eine Erhöhung des Anteils der erfindungsgemäßen Polyoldispersion in der Polyol-Komponente bei nahezu gleichem Mischungsverhältnis mit der Polyisocyanat-Komponente (100:120 bzw. 100:122) zu Materialien mit einer um 5 Shore A-Einheiten erhöhten Härte (56 anstatt 51).

## Patentansprüche

1. Verfahren zur Herstellung von Polymerdispersionen durch radikalische Polymerisation olefinisch ungesättigter Monomere in Gegenwart eines von Bernsteinsäure abgeleitete Baueinheiten aufweisenden Polyesterpolyols ohne olefinisch ungesättigte Gruppen, wobei dieses Polyesterpolyol einen Mindestgehalt an Bernsteinsäure von mehr als 50 Gew.-% bezogen auf die Summe aller Carbonsäuren aufweist, und gegebenenfalls weiterer Polyesterpolyole ohne olefinisch ungesättigte Gruppen.

2. Verfahren zur Herstellung von Polymerdispersionen durch radikalische Polymerisation olefinisch ungesättigter Monomere in Gegenwart eines OH-Prepolymers, das durch Umsetzung eines von Bernsteinsäure abgeleitete Baueinheiten aufweisenden Polyesterpolyols, wobei dieses einen Mindestgehalt an Bernsteinsäure von mehr als 50 Gew.-% bezogen auf die Summe aller Carbonsäuren aufweist, mit aromatischen Polyisocyanaten der Diphenylmethanreihe mit weniger als 50 Gew.-% an Zweikemisomeren erhältlich ist, und gegebenenfalls in Gegenwart weiterer Polyesterpolyole ohne olefinisch ungesättigte Gruppen.

3. Verfahren gemäß Anspruch 1 oder 2, bei dem als olefinisch ungesättigte Monomere Styrol, alpha-Methylstyrol, Ethylstyrol, Vinyltoluol, Divinylbenzol, Isopropylstyrol, Chlorostyrol, Butadien, Isopren, Pentadien, Acrylsäure, Methacrylsäure, Methacrylsäuremethylester, Vinylacetat, Acrylnitril, Methylvinylketon oder Kombinationen darauf eingesetzt werden.

4. Verfahren nach einem der Ansprüche 1 bis 3, bei dem Polycarbanatpolyole eingesetzt werden.

5. Polymerdispersion, erhältlich gemäß einem der Ansprüche 1 bis 4.

6. Verwendung von Polymerdispersionen gemäß Anspruch 5 zur Herstellung von Polyurethanen.

7. Geschäumte oder kompakte Formkörper enthaltend das Umsetzungsprodukt von Polymerdispersionen gemäß Anspruch 5 mit Polyisocyanaten.

8. Schuhsohle enthaltend das Umsetzungsprodukt von Polymerdispersionen gemäß Anspruch 5 mit Polyisocyanaten.

## Claims

1. Process for the preparation of polymer dispersions by radical polymerisation of olefinically unsaturated monomers in the presence of a polyester polyol without olefinically unsaturated groups and containing structural units derived from succinic acid, wherein the polyester polyol has a minimum content of succinic acid of more than 50 wt.%, based on the sum of all carboxylic acids, and optionally in the presence of further polyester polyols without olefinically unsaturated groups.

2. Process for the preparation of polymer dispersions by radical polymerisation of olefinically unsaturated monomers in the presence of an OH prepolymer obtainable by reaction of a polyester polyol containing structural units derived from succinic acid, wherein the polyester polyol has a minimum content of succinic acid of more than 50 wt.%, based on the sum of all carboxylic acids, with aromatic polyisocyanates of the diphenylmethane group having less than 50 wt.% binuclear isomers, and optionally in the presence of further polyester polyols without olefinically unsaturated groups.

3. Process according to claim 1 or 2, in which there are used as olefinically unsaturated monomers styrene, alpha-methylstyrene, ethylstyrene, vinyltoluene, divinylbenzene, isopropylstyrene, chlorostyrene, butadiene, isoprene, pentadiene, acrylic acid, methacrylic acid, methacrylic acid methyl ester, vinyl acetate, acrylonitrile, methyl vinyl ketone or combinations thereof.

4. Process according to any one of claims 1 to 3, in which polycarbonate polyols are used.

5. Polymer dispersion obtainable according to any one of claims 1 to 4.

6. Use of polymer dispersions according to claim 5 in the preparation of polyurethanes.

7. Foamed or compact moulded bodies containing the reaction product of polymer dispersions according to claim 5 with polyisocyanates.

8. Shoe sole containing the reaction product of polymer dispersions according to claim 5 with polyisocyanates.

## Revendications

1. Procédé pour produire des dispersions de polymères par polymérisation radicalaire de monomères oléfiniquement insaturés en présence d'un polyesterpolyol comportant des unités structurales dérivées de l'acide succinique sans groupes oléfiniquement insaturés, où ce polyesterpolyol présente une teneur minimale en acide succinique supérieure à 50 % en masse rapportée à la somme de tous les acides carboxyliques, et éventuellement d'autres polyesterpolyols sans groupes oléfiniquement insaturés.

2. Procédé pour produire des dispersions de polymères par polymérisation radicalaire de monomères oléfiniquement insaturés en présence d'un prépolymère OH, qui peut être obtenu par réaction d'un polyesterpolyol comportant des unités structurales dérivées de l'acide succinique, où celui-ci présente une teneur minimale en acide succinique supérieure à 50 % en masse rapportée à la somme de tous les acides carboxyliques, avec des polyisocyanates aromatiques de la série du diphénylméthane avec moins de 50 % en masse d'isomères à deux noyaux, et éventuellement en présence d'autres polyesterpolyols sans groupes oléfiniquement insaturés.

3. Procédé selon la revendication 1 ou 2, dans lequel on utilise comme monomères oléfiniquement insaturés le styrène, l'alpha-méthyl-styrène, l'éthylstyrène, le vinyltoluène, le divinylbenzène, l'isopropyl-styrène, le chlorostyrène, le butadiène, l'isoprène, le pentadiène, l'acide acrylique, l'acide méthacrylique, le méthacrylate de méthyle, l'acétate de vinyle, l'acrylonitrile, la méthylvinylcétone ou des combinaisons de ceux-ci.

4. Procédé selon l'une des revendications 1 à 3, dans lequel des polycarbonatepolyols sont utilisés.

5. Dispersion de polymères pouvant être obtenue selon l'une des revendications 1 à 4.

6. Utilisation de dispersions de polymères selon la revendication 5 pour la production de polyuréthanes.

7. Corps mis en forme expansés ou compacts contentant le produit de la réaction de dispersions de polymères selon la revendication 5 avec des polyisocyanates.

8. Semelle de chaussure contenant le produit de la réaction de dispersions de polymères selon la revendication 5 avec des polyisocyanates.
